Europäisches Patentamt

European Patent Office

Office européen des brevets

(11) Veröffentlichungsnummer: **0 480 260 A2**

## EUROPÄISCHE PATENTANMELDUNG

(21) Anmeldenummer: **91116500.9**

(51) Int. Cl.5: **H04Q 1/453**

(22) Anmeldetag: **27.09.91**

(30) Priorität: **12.10.90 DE 4032369**

(43) Veröffentlichungstag der Anmeldung:
**15.04.92 Patentblatt 92/16**

(84) Benannte Vertragsstaaten:
**BE FR GB IT NL SE**

(71) Anmelder: **TELENORMA GMBH**
**Mainzer Landstrasse 128-146**
**W-6000 Frankfurt/Main(DE)**

(72) Erfinder: **Grischkat, Wolfgang, Dipl.-Ing.**
**Schmorellstrasse 16**
**W-4100 Duisburg 18(DE)**

(54) **Digitaler-Mehrfrequenz-Empfänger für Kommunikations-Vermittlungsanlagen.**

(57) 2.1 Mit einem einzigen Mehrfrequenz-Code-Empfänger sollen die MFC-Signale von beiden Übertragungsrichtungen empfangen werden können. Es soll außerdem gewährleistet sein, daß der Empfänger auch dann ein MFC-Signal einwandfrei erkennt, wenn fälschlicherweise eine gültige Frequenzkombination der jeweils anderen Übertragungsrichtung vorliegt. Andersartige Störungen sollen ausgeblendet werden, und das Signalende soll schnell erkannt werden können.

2.2 Den digitalen auf bestimmten Frequenzen ausgelegten Bandpaßfiltern ist ein weiteres gemeinsames das gesamte MFC-Frequenzband umfassendes digitales Hilfsfilter parallel geschaltet. Dieses reagiert schnell auf Signaländerungen und beschleunigt das Erkennen des Signalendes. Es ermöglicht außerdem ein Störungsunterdrückung. Die Bandpaßfilter und das gemeinsame Hilfsfilter werden in Abhängigkeit von der Belegungsrichtung einer Verbindung auf unterschiedliche Frequenzgruppen umgeschaltet, indem ein jeweils zugehöriger Filterkoeffizientensatz zur digitalen Frequenzauswertung herangezogen wird. Dabei wirkt das gemeinsame Hilfsfilter entweder als Hochpaß oder als Tiefpaß.

2.3 Es ist nur ein einziger Empfänger für beide Übertragungsrichtungen erforderlich, welcher nur die einfache Anzahl von frequenzselektiven Elementen enthalten muß, um die MFC-R2-Signale zu erkennen. Die zur Ausblendung von Störfrequenzen vorgesehene Anordnung eines Hilfsfilters ist so beschaffen, daß nur tatsächlich als Störung zu betrachtende Frequenzen eine Erkennung von Signalen verhindern können.

Fig. 1

EP 0 480 260 A2

Die Erfindung betrifft einen Digitalen Mehrfrequenz-Empfänger für Kommunikations-Vermittlungsanlagen nach dem Oberbegriff des Patentanspruchs 1.

In dem vom CCITT im Jahr 1989 herausgegebenen "Blue Book" Teil III ist unter dem auf Seite 85 beginnenden Abschnitt 4 beschrieben, auf welcher Weise die an einer Verbindung beteiligten Register untereinander Informationen austauschen. Die dabei verwendeten Signale werden in einem Mehrfrequenzcode gesendet und empfangen, wobei dies in einem 2- aus 6-Code in beiden Richtungen geschieht. Welche Frequenzen dabei verwendet werden und international genormt sind, ist in einer Tabelle auf Seite 89 angegeben. Jedes der fünfzehn möglichen Zeichen ist aus zwei Frequenzen zusammengesetzt. Für die Vorwärtsrichtung wird dabei ein anderes Frequenzband benutzt als für die Rückwärtsrichtung. Dies bedeutet, daß in manchen Registern Empfänger vorhanden sein müssen, welche die Frequenzkombinationen beider Richtungen erkennen können. Da für jede einzelne Frequenz besondere Filter vorgesehen werden müssen, wäre also die doppelte Anzahl von Filtern und die zugehörigen Auswerteeinrichtungen vorzusehen.

Aus der DE-PS 32 47 401 ist ein Verfahren mit Sprachschutz zum Detektieren von Mehrfrequenz-Ton-Code-Signalen bekannt. Es handelt sich dabei um einen Mehrfrequenz-Codeempfänger, bei dem die diskrete Fourier-Transformation angewendet wird. Damit ist dieser Empfänger in der Lage, das Vorhandensein von jeweils nur zwei Frequenzen in einer Gruppe von insgesamt sechs Frequenzen von MFC-Signalen zu erkennen. Zu diesem Zweck enthält der Empfänger 6 frequenzselektive Elemente, die an den Eingang angeschlossen sind. Außerdem wird das Eingangssignal einer Sprachschutzschaltung zugeführt, welche für das gesamte Sprachfrequenzband durchlässig ist. Durch einen Vergleich der von der Sprachschutzschaltung empfangenen Energie mit dem Energieinhalt der detektierten MFC-Signalkombination kann erkannt werden, ob ein echtes Codezeichen vorliegt, oder ob Störfrequenzen vorhanden sind. Wenn die von der Sprachschutzschaltung detektierte Energie die der Tonsignale um einen bestimmten Wert überschreitet, so wird keine MFC-Signalkombination erkannt. Außerdem enthält die Sprachschutzschaltung ein sogenanntes Kammfilter, womit erreicht wird, daß beim Auftreten von relativ hohen Pegeln einer Einzelfrequenz fälschlicherweise ein MFC-Code-Signal erkannt wird.

Es ist außerdem in dieser Schrift erwähnt, daß in Abhängigkeit von der Übertragungsrichtung MFC-Signale mit unterschiedlichen Frequenzgruppen benutzt werden. Bei doppelt gerichteten Übertragungen müssen demnach zwei voneinander unabhängige Empfänger eingesetzt werden, wodurch ein relativ hoher Aufwand entsteht. Außerdem kann es vorkommen, daß ein Empfänger nicht anspricht, obwohl eine ordnungsgemäße, aus 2 Frequenzen bestehende MFC-Kombination am Eingang anliegt, wenn außerdem eine Frequenzkombination empfangen wird, die der in der anderen Übertragungsrichtung zuständigen Frequenzgruppe angehört. Dabei würde nämlich die Sprachschutzschaltung ansprechen und verhindern, daß ein Ausgangssignal abgegeben wird, obwohl ein ordnungsgemäßes Eingangssignal vorliegt.

Die Aufgabe der Erfindung besteht darin, einen Mehrfrequenz-Empfänger anzugeben, der die nach CCITT R2 genormten Mehrfrequenz-Code-Signale (MFC) beider Übertragungsrichtungen empfangen kann, ohne daß für die dann insgesamt 12 Frequenzen jeweils eigene frequenzselektive Elemente vorhanden sein müssen. Außerdem soll gewährleistet sein, daß der Empfänger auch dann ein MFC-Signal einwandfrei erkennt, wenn fälschlicherweise eine gültige Frequenzkombination in der jeweils anderen Übertragungsrichtung vorliegt.

Diese Aufgabe wird mit den im Patentanspruch 1 angegebenen Merkmalen gelöst.

Damit wird in vorteilhafter Weise erreicht, daß nur ein einziger Empfänger für beide Übertragungsrichtungen mit nur der einfachen Anzahl von frequenzselektiven Elementen erforderlich ist, um die MFC-R2-Signale zu erkennen. Die zur Ausblendung von Störfrequenzen vorgesehene Anordnung ist so beschaffen, daß nur tatsächlich als Störung zu betrachtende Frequenzen eine Erkennung von Signalen verhindern.

Weiterbildungen der Erfindung, welche besonders günstige Ausführungsformen aufzeigen, ergeben sich aus den Unteransprüchen.

Ein Ausführungsbeispiel der Erfindung wird nachfolgend an Hand von Zeichnungen näher erläutert.

Es zeigt

Figur 1    die Anordnung von mehreren Empfängern innerhalb eines digitalen Signalprozessors und dessen Verbindung mit einer Kommunikations-Vermittlungsanlage

Figur 2    das Prinzipschaltbild eines Mehrfrequenz-Code-Empfängers.

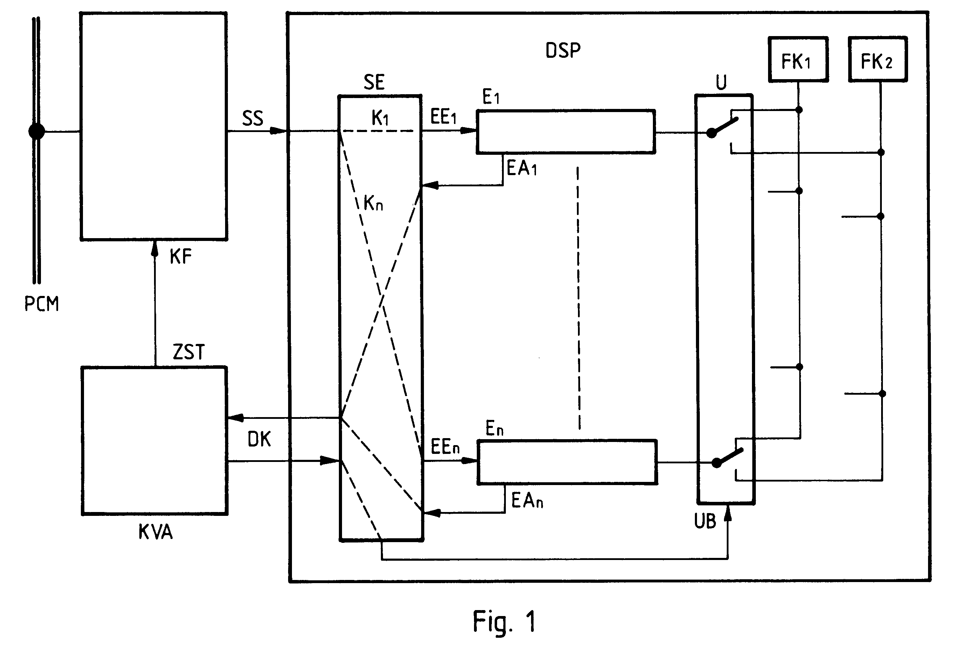

In der Figur 1 ist dargestellt, daß in einer digitalen Kommunikations-Vermittlungsanlage KVA ein digitales Koppelfeld KF vorgesehen ist, welches mindestens eine PCM-Sammelschiene PCM mit einer Sammelschiene SS verbindet, woran ein digitaler Signalprozessor DSP angeschlossen ist. Eine zentrale Steuereinrichtung ZST der Kommunikations-Vermittlungsanlage KVA steuert das Koppelfeld KF so, daß die Verbindungszeitlagen, welche den Anschluß eines Empfängers E1 bis En benötigen, auf die zum digitalen Signalprozessor DSP führende Sammelschiene SS geschaltet werden. Es ist dabei zweckmäßig, den einzelnen Empfängern E1 bis En jeweils feste Zeitlagen zuzuordnen. Im digitalen Signalprozessor befindet sich eine Steuereinrichtung SE, welche die auf der Sammelschiene SS angebotenen Zeitlagen oder Kanäle K1 bis Kn dem jeweiligen Empfänger E1 bis En zuordnet. Diese Steuereinrichtung SE ist außerdem über einen doppelt gerichteten Datenkanal DK mit der zentralen Steuerung ZST der Kommunikatons-Vermittlungsanlage KVA verbunden.

Das über die Sammelschiene SS ankommende Eingangssignal einer Verbindung wird über den zugeordneten Kanal K1 bis Kn dem jeweiligen Eingang EE1 bis EEn des zugehörigen Empfängers E1 bis En angeboten. Gleichzeitig wird von der Kommunikations-Vermittlungsanlage KVA über den Datenkanal DK angegeben, welche Belegungsrichtung für den jeweiligen Empfänger E1 bis En vorliegt. Dies geschieht durch einen Umschaltbefehl UB, womit eine symbolisch dargestellte Umschalteinrichtung U aktiviert wird. Damit wird der jeweilige Empfänger E1 bis En mit dem Filterkoeffizientensatz FK1 oder FK2 verbunden, der für die Frequenzgruppe zuständig ist, die der Belegungsrichtung entspricht.

Das gemeinsame digitale Hilfsfilter HFI ist so ausgelegt, daß es auf Signaländerungen schnell anspricht. Diese Eigenschaft wird dazu ausgenutzt, das Ende eines Signals schnell zu erkennen, indem der von Hilfsfilter HFI angegebene Summenwert überwacht wird. Wenn dieser einen bestimmten Pegel unterschreitet, so handelt es sich um das Ende eines MFC-Signals.

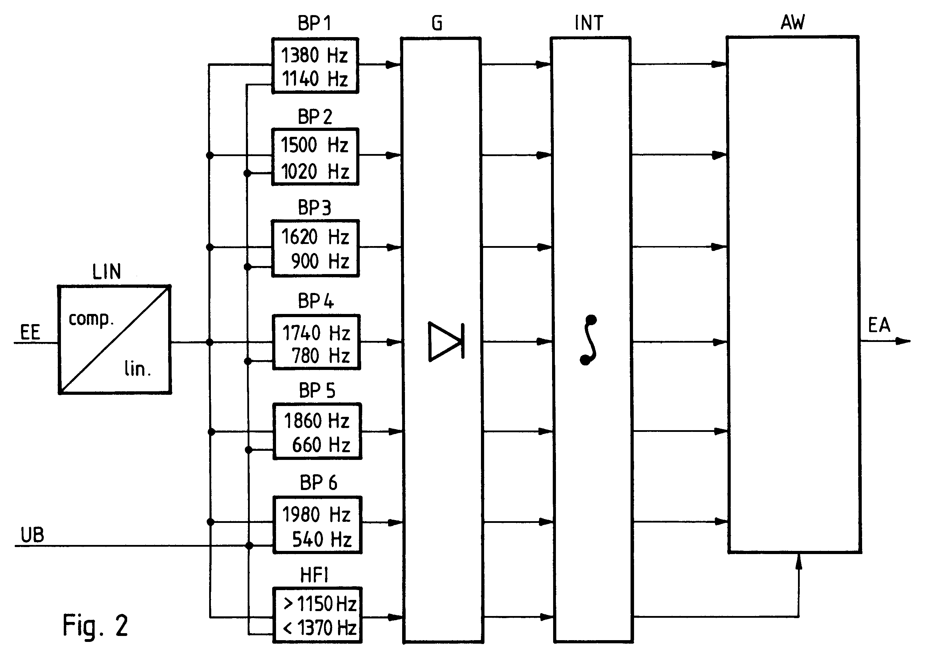

In der Fig. 2 ist dargestellt, wie der Eingang EE eines Empfängers mit den Bandpässen BP1 bis BP6 verbunden ist. Dazwischen geschaltet ist ein Linearisierer LIN, der die komprimierten PCM-Signale in lineare Werte umwandelt. Diese werden dann parallel den Bandpassen BP1 bis BP6 und dem Hilfsfilter HFI zugeführt. Die jeweils dazu gehörenden Frequenzbereiche sind angegeben. Der Umschaltbefehl UB gibt an, mit welchem Filterkoeffizientensatz FK1 oder FK2 die Bandpässe BP1 bis BP6 und das Hilfsfilter HFI zusammenarbeiten.

Die ausgewerteten Signale werden mit einem Gleichrichter G in von einem Vorzeichen unabhängige Werte gewandelt, so daß ein vorgegebener Pegel erkannt werden kann. Diese Werte werden in einer Integrierstufe I zusammengefaßt, um eine ausreichende Signallänge feststellen zu können. Sodann wird in einer Auswertestufe AW festgestellt, ob tatsächlich genau zwei Frequenzen vorliegen. Außerdem wird ein Pegelvergleich mit dem Ausgang des Hilfsfilters HFI durchgeführt. Wenn alle Parameter zutreffen, die ein gültiges Signal beschreiben, so erscheint dieses am Empfängerausgang EA.

**Patentansprüche**

1.  Digitaler-Mehrfrequenz-Empfänger für Kommunikations-Vermittlungsanlagen, wobei zeitmultiplexe digitalisierte Mehrfrequenz-Code-Signale (MFC) mit Hilfe von digitalen Koeffizienten durch digitale Bandpaßfilter ausgewertet werden, so daß ein Signal eindeutig am Vorhandensein von zwei aus insgesamt sechs Frequenzen nach dem CITT-R2-Code erkannt wird, indem digitale Filterbanken angewendet werden,
    **dadurch gekennzeichnet,**
    daß den digitalen auf bestimmte Frequenzen ausgelegten Bandpaßfiltern (BP1 bis BP6) ein weiteres gemeinsames, das gesamte MFC-Frequenzband umfassendes digitales Hilfsfilter (HFI) parallel geschaltet ist, das schnell auf Signaländerungen anspricht und das Erkennen des Signalendes beschleunigt, sowie eine Störungsunterdrückung ermöglicht,
    daß die Bandpaßfilter (BP1 bis BP6) und das gemeinsame Hilfsfilter (HFI) in Abhängigkeit von der Belegungsrichtung einer Verbindung auf unterschiedliche Frequenzgruppen umschaltbar sind, indem dann ein jeweils zugehöriger Filterkoeffizientensatz (FK1, FK2) zur digitalen Auswertung herangezogen wird, wobei das gemeinsame Hilfsfilter (HFI) entweder als Hochpaß oder als Tiefpaß wirkt.

2.  Mehrfrequenz-Empfänger nach Anspruch 1,
    **dadurch gekennzeichnet,**
    daß mehrere Empfänger (E1 bis En) in einem digitalen Signalprozessor (DSP) zusammengefaßt sind, dem die zu erkennenden Signale über eine gemeinsame Sammelschiene (SS) zugeführt werden.

3.  Mehrfrequenz-Empfänger nach Anspruch 1,
    **dadurch gekennzeichnet,**
    daß eine im Signalprozessor (DSP) befindliche Steuereinrichtung (SE) aus den auf der Sammelschiene (SS) angebotenen Signalen die einzelnen Kanäle (K1 bis Kn) verbindungsbezogen den einzelnen Empfängern zuteilt.

4.  Mehrfrequenz-Empfänger nach Anspruch 1,
    **dadurch gekennzeichnet,**
    daß der Steuereinrichtung (SE) des digitalen Signalprozessors von der Kommunikations-Vermittlungsanlage (KVA) über einen Datenkanal (DK) die jeweilige Belegungsrichtung einer mit einem Empfänger (E1 bis En) beschalteten Verbindung mitgeteilt wird, worauf der betreffende Empfänger (E1 bis En) über eine Umschalteinrichtung (U) mit dem entsprechenden, gemeinsam für alle Empfänger (E1 bis En) vorhandenen Filterkoeffizientensatz (FK1 oder FK2) verbunden wird.

5.  Mehrfrequenz-Empfänger nach Anspruch 1, **dadurch gekennzeichnet**,
    daß die Auswerteergebnisse der einzelnen Empfänger (E1 bis En) in die Steuereinrichtung (SE) des digitalen Signalprozessors (DSP) gelangen, welche eine Kanalkennzeichnung hinzufügt und sie über den Datenkanal (DK) zur Kommunikations-Vermittlungsanlage (KVA) überträgt.

Fig. 1

Fig. 2